# EUROPEAN PATENT APPLICATION

(11) **EP 4 742 200 A1**
(43) Date of publication of application: **13.05.2026**
(21) Application number: 25172655.0
(22) Date of filing: 25.04.2025
(51) Int. Cl.: G07C 9/00, B60R 25/24, B60R 25/25

(54) **VEHICLE ACCESS CONTROL SYSTEMS AND METHODS**

(30) Priority: 08.11.2024 RO 202400684
(71) Applicant: NXP USA, Inc., Austin, TX 78735 (US)
(72) Inventor: Sandu, Bogdan-Tudor, 5656AG Eindhoven (NL); Alioanei, Cosmin, 5256AV Eindhoven (NL)
(74) Representative: Colaiuda, Antonella

(57) **Abstract**

Aspects of this disclosure are directed to systems and methods, for controlling access to a vehicle. The system comprises: a transceiver device, configured to transmit signals to, and receive signals from, an access device of a user, thereby to provide an indication that the user is within a first range of the system; a sensing system, comprising a video camera, and configured to, in response to the indication, record movements of the user; and a processor, coupled to the sensing system, and configured to: analyse the movements, determine, from the movements, whether the user is one of a group of known users, and in response to determining that the user is a one of the group of known users, authenticate the user.

## Description

### FIELD OF THE DISCLOSURE

This present disclosure relates to systems and methods for controlling access to a vehicle.

### BACKGROUND

Conventional vehicle access systems and methods generally use communication technologies such as Bluetooth low energy (BLE) and ultra-wideband (UWB) communications and protocols, and provide access to the vehicle, using one or more digital keys within an access device (such as a key fob, or other mobile device such as a mobile phone). Such systems and methods generally rely on a single-factor authentication process based on a cryptographic verification of the digital key (or keys) stored in the access device.

Some access devices may offer a second level of protection, for instance the user may have to initiate, or "unlock", the device. However increasingly access devices are being configured to be normally on, in order to minimise inconvenience to a user when approaching the vehicle. Unauthorised use of the access device, for example resulting from theft of the device, may thus be a security threat.

Conversely, in order to avoid inconvenience to the user, conventional two factor authentication methods, such as requiring the user to input a personal identification number (PIN), may be undesirable.

### SUMMARY

According to a first aspect of the present disclosure, there is provided a system, for controlling access to a vehicle and comprising: a transceiver device, configured to transmit signals to, and receive signals from, an access device of a user, thereby to provide an indication that the user is within a first range of the system; a sensing system, comprising a video camera, and configured to, in response to the indication, record movements of the user; and a processor, coupled to the sensing system, and configured to: analyse the movements, determine, from the movements, whether the user is one of a group of known users, and in response to determining that the user is a one of the group of known users, authenticate the user.

Such systems thus provide access based on a combination of the digital key in the access device, and an attribute or characteristic of the user themselves, in particular related to the way a user moves.

In one or more embodiments, the system further comprises: an access controller, configured to, in response to the processer authenticating the user, provide access to the vehicle. In one or more embodiments, the system further comprises: an access controller, configured to, in response to both receiving an authentication of the access device and the processer authenticating the user, provide access to the vehicle. The access device may thus enable the movement recognition, or may enable the recognition and directly provide a second factor for the authentication.

The movements may include a gait. A gait is a type of movement which is generally unique to one, or a very small set of, individuals. Using gait as a "biometric" may thus uniquely identify an individual, or to identify the individual with a high degree of confidence, and is particularly convenient since it may be less dependent on environmental factors, such as lighting, than other biometrics such as facial recognition.

In one or more embodiments, the transceiver device comprises a blue-tooth low energy (BLE) device configured to authenticate the access device. The access controller may comprise a lock, and providing access comprises unlocking the lock. Moreover, the access controller may comprise a vehicle management system, and providing access comprises enabling the vehicle management system.

In one or more embodiments, the processor is further configured to, in response to receiving an indication that the user is a guest-user, authenticate the user without determining whether the user is one of a group of known users. The system may thus include a "bypass" functionality - for example in cases in which it does not have enough data about a possible user to authenticate them with a sufficiently high degree of confidence.

According to a further aspect of the present disclosure, there is provided a method of controlling access to a vehicle, comprising: receiving an indication that an access device of a user is within is within a first range of the vehicle; in response to the indication, recording, by a sensing system comprising a video camera, movements of the user; analysing the movements; determining, from the movements, whether the user is one of a group of known users; and in response to determining that the user is a one of the group of known users, authenticating the user.

In one or more embodiments receiving an indication that an access device of a user is within is within a first range of the system comprises: scanning, using a transceiver device, for the presence of the access device; and exchanging keys with the access device. In one or more embodiments, the method further comprises, in response to the processer authenticating the user: providing access, by an access controller, to the vehicle.

In one or more embodiments determining whether the user is one of a group of known users comprises use of a trained neural network. The method may include recording, by the sensing system, further movements of the user. The method may further comprise modifying weightings associated with the trained neural network, in response to the further movements.

The method may further comprise authenticating the access device; and in response to the processer authenticating the user and authenticating the access device: providing access, by an access controller, to the vehicle. In one or more embodiments, authenticating the access device comprises exchanging security using a UWB device. In one or more embodiments, the method further comprises receiving an indication that the user is a guest-user, and in response thereto, authenticating the user.

### BRIEF DESCRIPTION OF THE DRAWINGS

Reference will now be made to the accompanying drawings, which are not necessarily drawn to scale, and wherein:
FIG. 1, illustrates a vehicle access system consistent with one or more embodiments of the present disclosure;
FIG. 2 shows a flow diagram of a method according to one or more embodiments;
FIG. 3 shows a flow diagram of a method according to one or more other embodiments; and
FIG. 4 shows a flow diagram of a method according to one or more yet other embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION

The subject disclosure describes, among other things, methods and systems for controlling access to a vehicle. Whereas conventional systems provide access control by means of a user device, typically by single-factor authentication using cryptographic verification of a digital key stored in or associated with a user device, in embodiments of the present disclosure, enhanced security of the access control is provided by using a second-factor associated with the user themselves rather than a user device. The present disclosure thus relates to, and may be considered an analogous to, two-factor authentication, which in general requires "something you have and something you know". In the context of the present disclosure, this may be restated as "something you have and something you are".

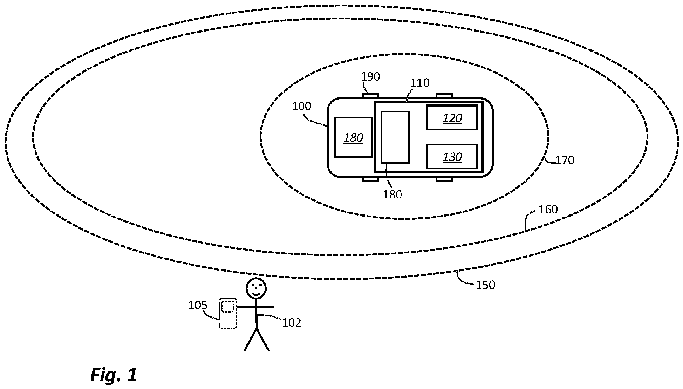

FIG. 1 illustrates a vehicle access system consistent with one or more embodiments of the present disclosure. The FIG. shows a vehicle 100 which includes a system 110 for controlling access to the vehicle.

The access control system 110 includes several parts, component or devices. In particular, the system is equipped with a transceiver device 120 which is configured to transmit signals to, and receive signals from, an access device 105 of a user 102. Typically, the transceiver device is normally operated in a scan mode, in which the transceiver periodically transmits a signal, which may be received by any access devices in the vicinity. If an access device is within a first range, shown as 150 in FIG. 1, it will receive the signal, and respond by transmitting a response. The transceiver device 120 receives the response, and the two devices implement a handshaking process. The handshaking process may be followed by a cryptographic verification by exchanging a digital key which is typcially stored in the access device. In other embodiments a cryptographic verification may not be undertaken at this stage. Although the present disclosure is not limited thereto, typically the scan mode to identify the presence of access device in the vicinity, and the exchange of signals, is carried out using a Bluetooth low energy (BLE) signal protocol.

When the access control system 110 becomes aware of a potentially valid access device in the vicinity, a sensing system 130 is operated. That is to say, once the connection is established and encrypted, the recognition step is triggered, and the vehicle starts monitoring the user as they approach the vehicle. The sensing system includes one or more video cameras which image the vicinity of the vehicle. The sensing system may include other sensors such as motion sensors, radar, or other sensing devices. The range 160 of the sensing system may be similar to that 150 of the transceiver device 120; conversely, since imaging will typically be required only when a user is approaching the vehicle, the range 160 may be somewhat smaller, as shown schematically in FIG. 1.

The sensing system is configured to record movements of the user, which may typically include one or more of walking speed, gait, movement patterns, gestures etc. The movements of the user are used to identify the user, by executing a recognition algorithm and comparing the results to a defined user match threshold, in order to determine whether the user is one of a group of known users. Access control system 110 thus includes a processor 140, one function of which is to run the recognition algorithm to make this determination.

The skilled person will appreciate that, in the event that the transceiver device is implementing BLE communication protocols, the range of such communications is sufficiently high (typically up to 30 m) that there is generally adequate time for the sensing system to capture movements and for the processor to run the recognition algorithm, before the user reaches the vehicle. In general then, even if the recognition algorithm takes a few seconds to run, the user will not experience any delay.

In order to identify whether the user is one of a group of known users, machine learning techniques, in the inference phase, are used. Thus, prior to deployment of the access control system in operation, a training phase is required during which a sensing system provides training data to a neural network. The sensing system used for the training phase may be the sensing system associated with the vehicle, or a separate sensing system in the event that the training phase is carried out remote from the vehicle. In some embodiments, the access control system is not deployed for inferencing immediately an individual user starts to use the vehicle. Instead, there may be a period during which the sensing system is used in conjunction with a neural network, or order for a machine learning algorithm in the processor to train the system with regards to the individual user, and in particular to recognise the user based on their gait or other movements. A non-limiting example of other movements, which the system they used to recognise a specific user, is a gesture such as a double wave, which the user may decide to implement in order to quickly train the system. The skilled person will appreciate that the disclosure is not limited thereto, and other gestures, such as a specific head movement or foot movement, may be adopted by a user in order to, once again, speed up a training phase of the system. Once the system is trained, it may enter the inferencing mode. From this point onwards the same capturing devices (video cameras, motions sensors, etc.) will not only acquire data for analysis and recognition but may, under appropriate conditions, also feed more training samples into the database for better accuracy results in the future. For example, the samples obtained, using the same device, during the inference phase may include additional information content, and once the sample has been confirmed as a "match", to grant access, the additional information content may be used in turn to continue to improve the accuracy of the model. Moreover, once the match has been confirmed, the sensing system may continue to gather data which may be employed to improve the model. It will be appreciated that such improvement of the model may be subject to a user setting, for example to continue to train until the user deems it unnecessary, or it might be limited to certain memory constraints on the system.

In other embodiments, movements associated with the individual user may already have been used by a similar system, for example a previous vehicle owned or used by the user, such that a model associated with that user may be directly transferred to the processor. In such cases the access control system may be deployed for inferencing immediately the user starts to use the vehicle.

The access controller may comprise, be part of, or may interact with, a vehicle management system 180. The vehicle management system may control the operation of the vehicle. In particular, in the event that the vehicle is a petrol or diesel fueled vehicle, the vehicle management system may include an ignition system, which can be enabled or inhibited. The access controller may, once a user has been authenticated, and the access device also authenticated in embodiments in which authentication of the device is required in addition to authentication of the user, enable the vehicle management system to give control of the vehicle to the user, for example by enabling the emission system. In the event that the vehicle is an electric vehicle (EV) the vehicle management system may control various functions within the vehicle, and respond to authentication of the user, and where appropriate of the access device, by enabling the user to interact with the vehicle, for example to start the vehicle motor. Thus, as used herein, the term "access" should be interpreted broadly, to encompass not merely physical access (for example, allowing entry into the vehicle), but other enablement mechanisms, such as allowing the user to operate or "access" electronic vehicle systems, or engine systems, and the like.

The access controller may comprise a lock 190, or other vehicle entry security mechanism. In response to authenticating the user, and where appropriate authenticating the access device, the access controller may provide access to the vehicle by, for example unlocking the lock 190.

Increasingly, vehicle control access systems rely not just on long-range BLE communication and cryptographic verification of a digital key, but also employ UWB communications at short range, such as the range 170 shown in FIG. 1. Thus, in one or more embodiments, a further authentication process is carried out using UWB technology. UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, as well as in a radar mode.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. The TDoA technique is particularly suitable for real-time localization operations. Generally speaking, the term "ranging mode" covers all types of localization operations based on UWB message exchanges with an external UWB communication device. It is noted that AoA calculations may be used in combination with both ToF calculations and TDoA calculations.

In UWB-based authentication, UWB ranging mode of operation may be used in conjunction with cryptographic verification of a digital key stored in the access device, in order to provide confidence that the device interacting with the vehicle-based system is in fact the user's access device, and not a "man in the middle" forwarding device. The skilled person will be aware that many modern security threats are based on use of a "man in the middle" forwarding device to trick the vehicle into believing that a remote (attackers) device is the local, user's, device. By combining a ranging measurement with cryptographic authentication, UWB secure authentication can significantly reduce or even eliminate such a threat.

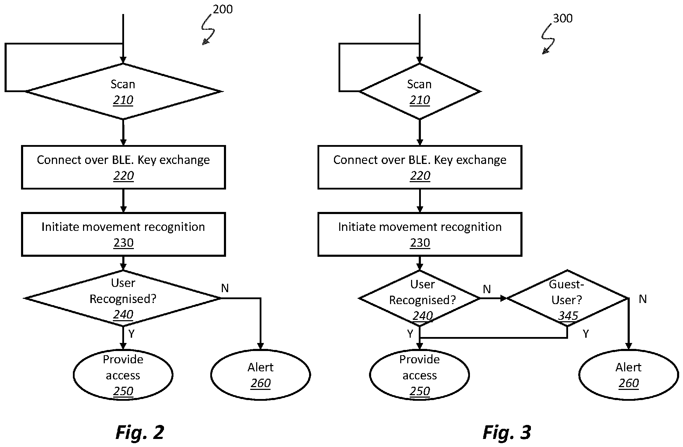

Turning now to FIG. 2, this shows a flow diagram of a method 200 according to one or more embodiments of the present disclosure. The method 200 starts by the access control system scanning, at 210, for the presence of any access devices. In the event that the access control system receives a signal from a user's access device 105 such as a key fob or a mobile device such as a mobile phone, the transceiver device 120 connects, at 220 to the access device 105, typically by BLE. The two devices also perform a cryptographic verification of the access devices key by means of key exchange, typically as defined under established Bluetooth Low Energy (BLE) protocol, such as according to the IEEE 802.15.1 standard. Furthermore, once the access device has been validated as a potentially valid device, the movement recognition step 230 is initiated. During this step, the sensing system 130 records movements of, or in the vicinity of, the access device, generally over the full 360°. During the sensing of such movements, the system will record movements of a user the access device. For example the access device may be held by, or in a pocket of, the user. The processor runs the movement recognition algorithm, and determines whether the user is recognised, at 240. If the process recognises the user, and in particular if the process is able to determine that yet the user is one of a group of known users for which the movement characteristics are known by the processor, and are deemed to be authorised uses of the vehicle, then the processor authenticates the user as shown at step 250. In one or more embodiments, if the processor is unable to recognise the user, or, in some embodiment, if the processor identifies the user as a known but unauthorised person, system may provide an alert, as shown at 260. The alerts may take one of a wide variety of forms such as, without limitation, providing a message to the owner of the vehicle, temporarily or permanently disabling the vehicle, providing an audible or visual alarm signal, and so on.

It will be appreciated that this authentication process is of the user, rather than the access device. Such a user authentication may be provided as the sole security measure although in preferred embodiments, it is combined with a secondary authentication. The secondary authentication may be provided by the BLE communication exchange described above in step 220.

FIG. 3 shows a method 300 according to one or more other embodiments of the present disclosure. This method is similar to that shown in FIG. 2, and so corresponding steps will not be described. However in the event that the processor is unable to recognise the user, the system may try to identify if the user is a guest-user, at 345. The system may use one of a variety of mechanisms to identify the guest user. For example, the system may message the owner of the vehicle to determine whether access should be provided at this time. Alternatively and without limitation, the system may provide an image of the approaching user to the vehicle owner and ask the owner to confirm whether the approaching user is in fact a guest-user. In other embodiments, the system may transmit a message to the access device asking for verification (such as a PIN code) with which a guest-user is able to provide but an unauthorised user would not be able to provide. If the system is able to confirm that the user is a guest-user, then the method proceeds to provide access at step 250. In such embodiments, the alerts 260 may only be provided if both the user is not recognised, at step 240, and the result of the determination at step 345 is that the user is not a guest user.

As a variant to that shown in FIG. 3, according to other embodiments, the method may include carrying out the movement recognition in parallel with investigations for a guest user.

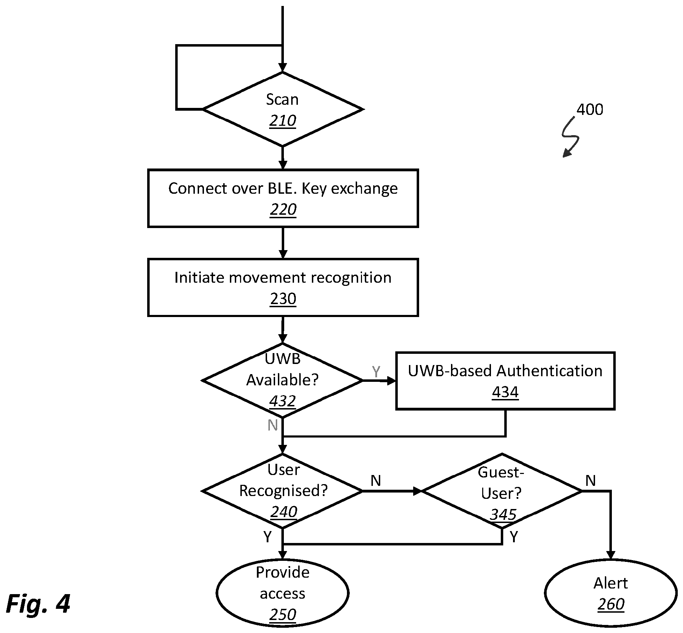

FIG. 4 shows a method 400 according to one or more other embodiments of the present disclosure. This method is similar to that shown in FIG. 3, and so corresponding steps will not be described. However, in this embodiment, if UWB authentication is available (as shown at step 432) then a UWB-based authentication process, such as that described above, is performed, as shown at step 434.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### List of Reference signs:

- 100: Vehicle
- 102: User
- 105: Access Device
- 110: Access control system
- 120: Transceiver device
- 130: Sensing system
- 140: Processor
- 150: Range of transceiver device
- 160: Range of sensing system
- 170: Lock
- 180: Vehicle Management System
- 190: Access Controller
- 200, 300, 400: Methods according to various embodiments
- 210, 220, 230, 240, 250, 260: Method steps
- 345: Method step
- 432, 434: Method steps

## Claims

1. A system, for controlling access to a vehicle and comprising:
a transceiver device, configured to transmit signals to, and receive signals from, an access device of a user, thereby to provide an indication that the user is within a first range of the system;
a sensing system, comprising a video camera, and configured to, in response to the indication, record movements of the user; and
a processor, coupled to the sensing system, and configured to:
analyse the movements,
determine, from the movements, whether the user is one of a group of known users, and
in response to determining that the user is a one of the group of known users, authenticate the user.

2. The system of claim 1, further comprising:
an access controller, configured to, in response to the processer authenticating the user, provide access to the vehicle.

3. The system of claim 1, further comprising:
an access controller,
configured to, in response to both receiving an authentication of the access device and the processer authenticating the user, provide access to the vehicle.

4. The system of any preceding claim, wherein the movements include a gait.

5. The system of claim 3 or any other claim dependent thereon, wherein the transceiver device comprises a blue-tooth low energy, BLE, device configured to authenticate the access device.

6. The system of any claim 2 or 3, or any claim depending from claim 2 or claim 3, wherein the access controller comprises a lock, and providing access comprises unlocking the lock.

7. The system of any claim 2 or 3 or any claim depending from claim 2 or claim 3, wherein the access controller comprises a vehicle management system, and providing access comprises enabling the vehicle management system.

8. The system of any preceding claim, wherein the processor is further configured to, in response to receiving an indication that the user is a guest-user, authenticate the user without determining whether the user is one of a group of known users.

9. The system of any preceding claim, wherein the processer comprises a trained neural network.

10. A method of controlling access to a vehicle, comprising:
receiving an indication that an access device of a user is within is within a first range of the vehicle;
in response to the indication, recording, by a sensing system comprising a video camera, movements of the user;
analysing the movements;
determining, from the movements, whether the user is one of a group of known users; and
in response to determining that the user is a one of the group of known users, authenticating the user.

11. The method of claim 9, wherein receiving an indication that an access device of a user is within is within a first range of the vehicle comprises:
scanning, using a transceiver device, for the presence of the access device; and
exchanging keys with the access device.

12. The method of claim 9 of 10, further comprising, in response to authenticating the user:
providing access, by an access controller, to the vehicle.

13. The method of claim 9 or 10, further comprising:
authenticating the access device; and
in response to authenticating the user and authenticating the access control device: providing access, by an access controller, to the vehicle.

14. The method of any of claims 9 to 12, wherein authenticating the access device comprises exchanging security using a UWB device.

15. The method of any of claims 9 to 12, further comprising:
receiving an indication that the user is a guest-user, and in response thereto, authenticating the user.
